# EUROPÄISCHE PATENTANMELDUNG

(11) **EP 3 398 706 A1**
(43) Veröffentlichungstag der Anmeldung: **07.11.2018**
(21) Anmeldenummer: 17169393.0
(22) Anmeldetag: 04.05.2017
(51) Int. Cl.: B23F 1/02

(54) **VORRICHTUNG UND VERFAHREN ZUM NACHBEARBEITEN VON ZAHNRAD-WERKSTÜCKEN**

(71) Anmelder: Klingelnberg AG, 8050 Zürich (CH)
(72) Erfinder: Gsell, Jürgen, 42899 Remscheid (DE); Müller, Hartmuth, 42857 Remscheid (DE)
(74) Vertreter: Heusch, Christian

(57) **Zusammenfassung**

Bearbeitungsmaschine (20) zum Bearbeiten eines Zahnrad-Werkstücks (1), umfassend:
- eine Werkzeugspindel (21) zum Befestigen eines Werkzeugs (2),
- eine Werkstückspindel (22) zum Befestigen des Zahnrad-Werkstücks (1),
- eine CNC-Steuerung (50) und mehrere Achsen zum CNC-gesteuerten Bearbeiten des Zahnrad-Werkstücks (1) mit dem Werkzeug (2),
- einen optischen Detektor (40), der dazu einsetzbar ist, um Bildinformation (BI) des Zahnrad-Werkstücks (1) zu erfassen, und
- ein Modul (51), das dazu ausgelegt ist anhand der Bildinformation (BI) des Zahnrad-Werkstücks (1) charakteristische Istgrössen des Zahnrad-Werkstücks (1) zu ermitteln.

## Beschreibung

Die Erfindung betrifft Vorrichtungen und Verfahren zum Nachbearbeiten von Zahnrad-Werkstücken unter Einsatz eines Werkzeugs.

### Stand der Technik

Es ist bekannt Zahnrad-Werkstücke einer Nachbearbeitung zu unterziehen, um fertigungsbedingte Abweichungen zu korrigieren, oder um Härteverzüge zu reduzieren, die sich beim Härten eines vorverzahnten Zahnrad-Werkstücks ergeben.

Häufig geschieht diese Nachbearbeitung in einer CNC-gesteuerten Bearbeitungsmaschine, die einen Sensor zum taktilen Abtasten des Zahnrad-Werkstücks umfasst. Nachdem das Abtasten erfolgt ist, kann die Nachbearbeitung in dieser Maschine erfolgen.

Es ist ein Nachteil dieses Ansatzes, dass das taktile Abtasten langsam ist. Um einen Kompromiss zwischen der Aussagekraft der durch Abtasten ermittelten Information und dem Durchsatz der Bearbeitungsmaschine zu finden, wird das Abtasten auf zum Beispiel nur drei Zahnflanken beschränkt. Anhand der so gewonnenen Information wird dann die Nachbearbeitung vorgenommen.

Es ist ein weiterer Nachteil des Einsatzes eines taktilen Sensors, dass dieser empfindlich ist und daher vorsichtig zugestellt werden muss.

Von daher liegt der Erfindung die Aufgabe zugrunde, einen Ansatz bereit zu stellen, um möglichst schnell möglichst viel Information über ein Zahnrad-Werkstück in einer Bearbeitungsmaschine zu erfassen.

Die Erfindung setzt zu diesem Zweck einen optischen Detektor als Sensor ein, wobei dieser Detektor so in der Bearbeitungsmaschine angeordnet ist, dass er in einem Durchgang alle wesentlichen Details des Zahnrad-Werkstücks erfassen kann. Alternativ, falls der Detektor keinen entsprechend großen Abbildungsbereich aufweist, wird zum Erfassen alle wesentlichen Details eine Relativbewegung des Detektors gegenüber dem Zahnrad-Werkstück eingesetzt.

Um die Bildinformation, die vom Detektor bereitgestellt wird, technisch nutzbar zu machen, wird diese Bildinformation einem Ermittlungsverfahren unterzogen. Im Rahmen dieses Ermittlungsverfahrens werden anhand der Bildinformation charakteristische Istgrössen des Zahnrad-Werkstücks ermittelt.

Dann erst folgt in der Bearbeitungsmaschine das Durchführen eines Bearbeitungsverfahrens mindestens einer Flanke des Zahnrad-Werkstücks mit dem Werkzeug, wobei mindestens eine charakteristische Istgrösse verwendet wird, um durch eine Relativbewegung das Werkzeug kollisionsfrei in eine Zahnlücke des Zahnrad-Werkstücks zu bewegen, deren Flanke dem Bearbeitungsverfahren unterzogen werden soll.

Zwischen dem Erfassen der Bildinformation und dem Durchführen des Bearbeitungsverfahrens wird das Zahnrad-Werkstück nicht umgespannt. D.h. das Zahnrad-Werkstück verbleibt bei allen Ausführungsformen in der Bearbeitungsmaschine, um so die räumliche Zuordnung zwischen dem Zahnrad-Werkstück und der Bearbeitungsmaschine zu erhalten.

Weitere vorteilhafte Ausführungsformen sind den abhängigen Patentansprüchen zu entnehmen.

Es ist ein Vorteil der Erfindung, dass sowohl das optische Messen als auch das Nachbearbeiten in einer Bearbeitungsmaschine ohne Umspannen des Zahnrad-Werkstücks erfolgt. Dadurch kann gewährleistet werden, dass optisch ermittelte charakteristische Istgrössen des Zahnrad-Werkstücks verwendet werden können, um ein Werkzeug relativ zum Zahnrad-Werkstück kollisionsfrei in eine Zahnlücke einfahren zu können.

Es ist ein Vorteil der Erfindung, dass sehr kurze Prüfzeiten ausreichen, um die nachfolgenden Schritte des Nachbearbeitens zu planen. Das optische Verfahren der Erfindung ist deutlich schneller als Verfahren, die mit taktilen Sensoren arbeiten. Ausserdem kann man mit einem optischen Detektor mit einer oder mit nur wenigen Aufnahmen (Abbildungen) ein gesamtes Zahnrad-Werkstück erfassen. Bei taktil arbeitenden Verfahren werden teilweise nur drei Zahnflanken angetastet, um dann anhand dieser Information Korrekturen zu berechnen.

Das Verfahren der Erfindung kann z.B.
- zur Teilungsprüfung/Teilungsmessung und -korrektur,
- zum Prüfen und zur Korrektur von Rundlauffehlern,
- zum schnellen Finden einer Zahnlücke und/oder eines Zahnkopfes,
- zum Einmitten des Werkzeugs in Bezug auf eine Zahnlücke,
- zum Nachbearbeiten/Feinbearbeiten von gehärteten Zahnrad-Werkstücken,
- zum Planen einer verfahrensoptimierten Nachbearbeitung von gehärteten Zahnrad-Werkstücken
eingesetzt werden.

Die Erfindung bietet den Vorteil, dass bei gehärteten Zahnrad-Werkstücken die Nachbearbeitung so geplant und durchgeführt werden kann, dass nicht die Härteschicht an den Zahnflanken des Zahnrad-Werkstücks abgetragen wird.

### ZEICHNUNGEN

Ausführungsbeispiele der Erfindung werden im Folgenden unter Bezugnahme auf die Zeichnungen näher beschrieben.
- **FIG. 1**: zeigt eine stark schematisierte Ansicht eines Abschnitts eines Tellerrad-Werkstücks;
- **FIG. 2A**: zeigt eine stark schematisierte Ansicht der Bildinformation eines Ausschnitts a1 der Fig. 1, die gemäß Erfindung mit einem optischen Detektor ermittelt wurde;
- **FIG. 2B**: zeigt eine stark schematisierte Ansicht von Daten, die während eines Ermittlungsverfahrens aus der Bildinformation der Fig. 2A ermittelt wurden;
- **FIG. 2C**: zeigt eine stark schematisierte Ansicht von Kanteninformation, die am Ende eines Ermittlungsverfahrens aus der Bildinformation der Fig. 2B ermittelt wurde;
- **FIG. 3A**: zeigt eine vereinfachte perspektivische Ansicht eines optischen Detektors, der in einer Bearbeitungsmaschine der Erfindung zum Einsatz kommen kann;
- **FIG. 3B**: zeigt eine schematisierte Blockdarstellung der Komponenten eines optischen Detektors der Fig. 3A;
- **FIG. 3C**: zeigt eine schematisierte Blockdarstellung der Komponenten eines beispielhaften Moduls der Erfindung;
- **FIG. 4**: zeigt eine schematisierte Ansicht eines Teils einer erfindungsgemäßen Bearbeitungsmaschine, hier eine Schleifmaschine, die gemäß Erfindung mit einem optischen Detektor ausgestattet und gemäß Erfindung eingerichtet ist;
- **FIG. 5A**: zeigt eine stark schematisierte Ansicht der Bildinformation eines Ausschnitts a1, wobei diese Bildinformation mit dem optischen Detektor der Bearbeitungsmaschine, wie in Fig. 4 gezeigt, ermittelt wurde;
- **FIG. 5B**: zeigt eine stark schematisierte Ansicht von Kanteninformation, die am Ende eines Ermittlungsverfahrens aus der Bildinformation der Fig. 5A ermittelt wurde.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Schutzansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

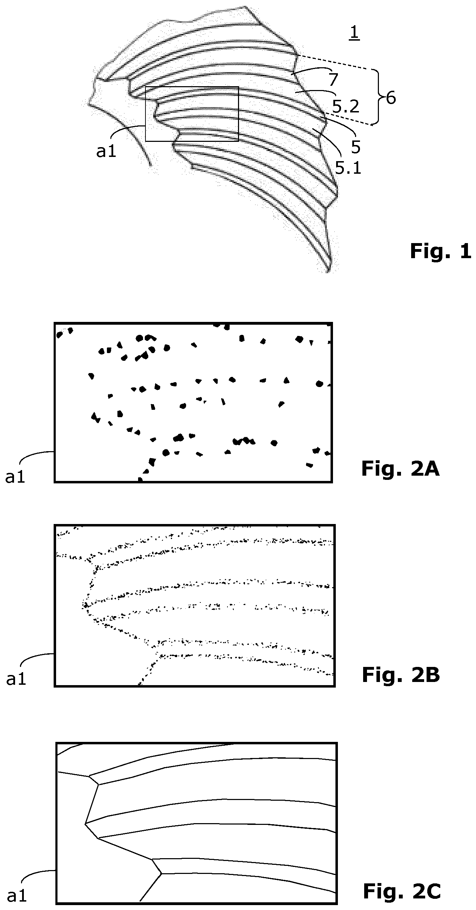

Bevor beispielhafte Ausführungsformen der Erfindung beschrieben werden, wird anhand der Figuren 1, 2A bis 2C das Prinzip des Verfahrens der Erfindung erläutert.

Fig. 1 zeigt eine stark schematisierte Ansicht eines Abschnitts eines Tellerrad-Werkstücks 1. Ein Zahn 5 des Tellerrad-Werkstücks 1 ist in Fig. 1 mit einem Bezugszeichen versehen. Das Bezugszeichen 5 zeigt hier auf den Zahnkopf des Zahnes. Der Zahn 5 ist auf einer Seite durch eine konkave Zahnflanke 5.1 und auf der anderen Seite durch eine konvexe Flanke 5.2 begrenzt. Oberhalb der konvexen Zahnflanke 5.2 ist hier der Zahnfuß einer Zahnlücke 6 mit dem Bezugszeichen 7 versehen. Der Bereich der Zahnlücke 6 ist durch eine geschweifte Klammer angedeutet.

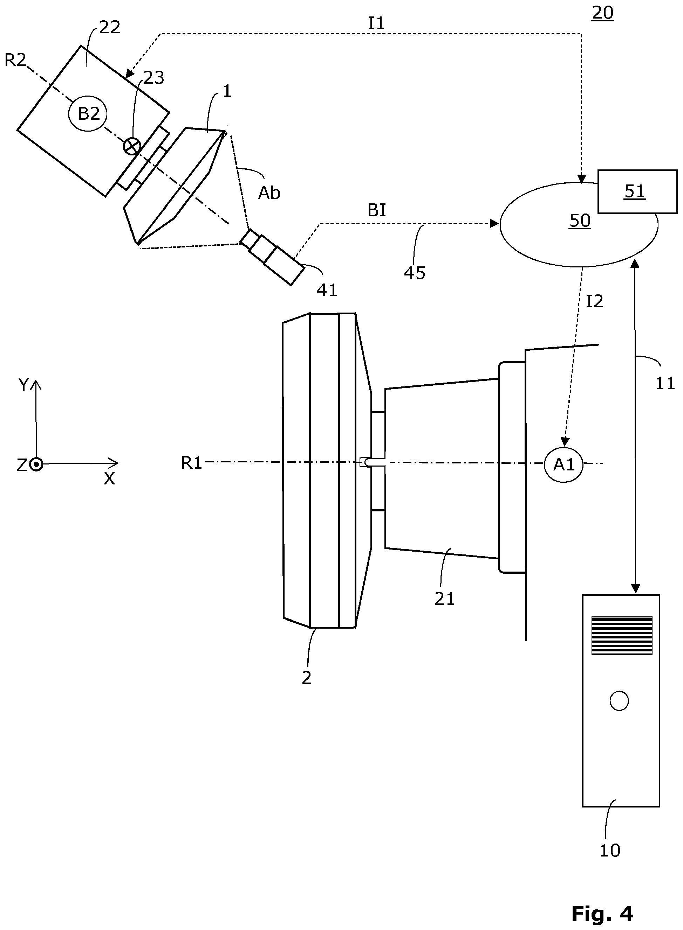

Gemäß Erfindung geht es um ein Verfahren zum Bearbeiten von vorverzahnten Zahnrad-Werkstücken, wie z.B. dem Tellerrad-Werkstück 1 der Fig. 1. Bevor Bearbeitungsschritte in einer Bearbeitungsmaschine (z.B. die Schleifmaschine 20 der Fig. 4) an dem Zahnrad-Werkstück 1 durchgeführt werden, muss die Position des Zahnrad-Werkstücks 1 in der Bearbeitungsmaschine 20 bestimmt werden. Gemäß Erfindung kommt zu diesem Zweck ein Sensor zum Einsatz, wie im Folgenden beschrieben wird.

Gemäß Erfindung dient ein optischer Detektor 40 als Sensor, um Bildinformation BI des Zahnrad-Werkstücks 1 zu erfassen. Falls ein solcher optischer Detektor 40 nicht ein gesamtes Zahnrad-Werkstück 1 und dessen Details mit ausreichender Auflösung erfassen kann, wird während des Einsetzens des optischen Detektors 40 eine Relativbewegung zwischen dem Detektor 40 und dem Zahnrad-Werkstück 1 ausgeführt, wie später beschrieben wird.

Es gibt aber auch Konstellationen, wie z.B. in Fig. 4 gezeigt, bei denen ein optischer Detektor 40 mit einer Aufnahme ein gesamtes Zahnrad-Werkstück 1 und dessen Details mit ausreichender Auflösung erfassen kann. In diesem Fall ist nicht unbedingt eine Relativbewegung zwischen dem Detektor 40 und dem Zahnrad-Werkstück 1 notwendig.

In Fig. 1 ist nur ein kleiner Bildausschnitt a1 durch ein rechteckiges Sichtfenster angedeutet. Der Bildausschnitt a1 muss nicht dem Abbildungsbereich des Detektors 40 entsprechen.

Ein optischer Detektor 40, wie er hier zum Einsatz kommt, liefert Bildinformation BI. Diese Bildinformation BI umfasst vorzugsweise bei allen Ausführungsformen der Erfindung eine große Anzahl von Bildpunkten. In Fig. 2A sind innerhalb des Ausschnitts a1 beispielhaft und schematisch eine Anzahl von Bildpunkten gezeigt. Um diese Punktewolke aus einzelnen Bildpunkten technisch verwerten zu können, wird die Bildinformation BI gemäß Erfindung einem rechnerischen Ermittlungsverfahren unterzogen.

Beim Durchführen dieses Ermittlungsverfahrens werden anhand der Bildinformation BI charakteristische Istgrössen cIG des Zahnrad-Werkstücks 1 ermittelt. Der Begriff der charakteristischen Istgrössen cIG wird hier verwendet, um zu beschreiben, dass es sich um Größen, Werte oder Daten handelt, die für das Zahnrad-Werkstück 1 charakteristisch sind. Bei den charakteristischen Istgrössen cIG kann es sich z.B. um die Winkelposition der einzelnen Zahnflanken des Zahnrad-Werkstücks 1 handeln.

Vorzugsweise handelt es sich bei allen Ausführungsformen der Erfindung bei den charakteristischen Istgrössen cIG um geometrische und/oder um topografische Information des Zahnrad-Werkstücks 1.

Die charakteristischen Istgrössen cIG können bei allen Ausführungsformen z.B. die Topografie umfassen. Wenn z.B. mittels des optischen Detektors 40 von jeder Zahnflanke 500 Punkte erfasst werden und diese (Istpunkte) rechnerisch solange im Raum gemeinsam "bewegt" werden bis die Gesamtdifferenz zu den Sollpunkten der Zahnflanke minimal ist, so kann daraus eine Maschineneinstellung der Bearbeitungsmaschine 20 für das geringsten Aufmaß ermittelt werden.

Um aus einer Punktewolke, wie beispielhaft in Fig. 2A gezeigt, technisch brauchbare, charakteristische Istgrössen cIG ermitteln zu können, kann bei allen Ausführungsformen zum Beispiel ein Algorithmus zur Kantendetektion eingesetzt werden. Anhand der Figuren 2B und 2C wird dies im Folgenden näher beschrieben.

Fig. 2B zeigt denselben Ausschnitt a1 wie auch die Fig. 2A. Die Bildinformation BI der Fig. 2A wurde mit einem Algorithmus zur Kantendetektion aufbereitet. Dabei wurden Bildpunkte, die auf einem Linienzug oder Polygonzug liegen stärker betont, während andere Bildpunkte (wie z.B. einzelne Bildstörungen) unterdrückt wurden. In Fig. 2B kann auch das menschliche Auge bereits in etwa den Kantenverlauf des Zahnrad-Werkstücks 1 erkennen.

Nun kommt der eigentliche Algorithmus zur Kantendetektion zur Anwendung, um aus den diskreten Bildpunkten der Fig. 2B Kanteninformation zu gewinnen. In Fig. 2C ist ein beispielhaftes Ergebnis nach Anwendung des Algorithmus zur Kantendetektion gezeigt. Es ist zu erkennen, dass die Bildpunkte durch Polygonzüge ersetzt wurden.

Durch weitere Zwischenschritte und/oder Nachbearbeitungsschritte kann das Ergebnis bei allen Ausführungsformen weiter verbessert werden. Nach der Anwendung des Algorithmus zur Kantendetektion kann zum Beispiel ein Algorithmus zum Einsatz kommen, der dazu dient die einzelnen Abschnitte der Polygonzüge durch Kurvenabschnitte anzunähern. In diesem Fall würde der leicht eckige Verlauf der Polygonzüge in Fig. 2C durch einen sanften Kurvenverlauf angenähert.

Die entsprechenden Verfahren zu Bildbearbeitung sind hinlänglich bekannt und werden hier nicht weiter im Detail beschrieben. Es gibt zahlreiche Softwareprodukte, die darauf spezialisiert sind Bildinformation in eine Kantendarstellung und/oder Flächendarstellung zu überführen. Als Beispiel ist hier die Vektorisierung genannt, die aus Bildpunkten eine Vektorschar erstellt.

Wichtig ist, dass als Ergebnis des Ermittlungsverfahrens charakteristische Istgrössen cIG des Zahnrad-Werkstücks 1 zur Verfügung stehen. Bei der erwähnten Kantendarstellung und/oder Flächendarstellung sind die Kanten und/oder die Flächen geometrisch-mathematisch im 3-dimensionalen Raum definiert. Somit liegen diese als charakteristische Istgrössen cIG vor.

Vorzugsweise kommt bei allen Ausführungsformen der Erfindung eine CCD-Vorrichtung 41 (CCD steht für charged-coupled device) als optischer Detektor 40 zum Einsatz.

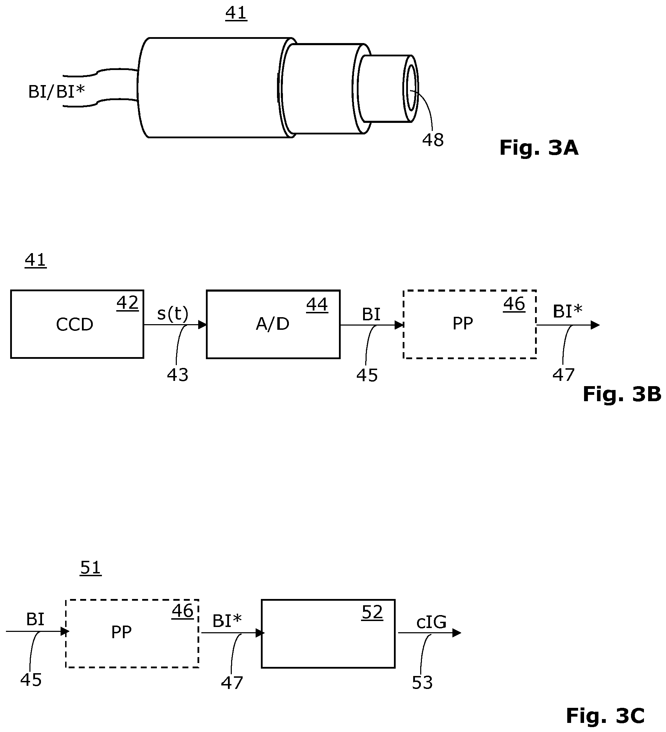

In Fig. 3A ist eine CCD-Vorrichtung 41 beispielhaft und in perspektivischer Form gezeigt. Die CCD-Vorrichtung 41 der Fig. 3A kann im Inneren die Elemente/Schaltungsblöcke der Fig. 3B enthalten. Auf einer Seite umfasst die CCD-Vorrichtung 41 eine Apertur, die bei allen Ausführungsformen mit einer optischen Linse 48 versehen sein kann.

In Fig. 3B sind die Elemente/Schaltungsblöcke einer CCD-Vorrichtung 41 beispielhaft und in schematischer Form gezeigt. Diese Vorrichtung 41 umfasst vorzugsweise bei allen Ausführungsformen ein CCD-Element 42 (z.B. ein CCD Chip), das an einem Ausgang 43 ein analoges Ausgangssignal s(t) bereitstellt. Dieses Ausgangssignal s(t) kann beispielweise mittels eines Analog-zu-Digital Wandlers 44 in ein digitales Signal umgewandelt werden. Dieses digitale Signal enthält oder trägt die Bildinformation, die von dem CCD-Element 42 erfasst wurde. Daher ist der Ausgang 45 mit dem Symbol BI versehen.

Die CCD-Vorrichtung 41 kann bei allen Ausführungsformen zusätzlich oder alternativ zu den in Fig. 3B gezeigten Elementen/Schaltungsblöcken eines oder mehrere der folgenden Elemente/Schaltungsblöcke umfassen:
- Speicher (z.B. ein Speicherchip),
- eine CPU (CPU steht für zentrale Verarbeitungseinheit),
- eine Hardware-Schnittstelle (z.B. zur Datenübertragung der Bildinformation BI oder BI* an einen nachgeschalteten Prozessor (z.B. als Teil eines Computers oder einer Steuerung 50)),
- eine Spannungsversorgung oder eine Hardware-Schnittstelle zum Verbinden mit einer Spannungsversorgung,
- eine Schnittstelle zum Steuern der CCD-Vorrichtung 41 von außen (z.B. zum Steuern mittels eines Computers oder einer Steuerung 50).

Optional kann bei allen Ausführungsformen eine digitale Schaltung zur Nachbearbeitung oder Aufbereitung der Bildinformation BI vorgesehen sein, wie in Fig. 3B durch den Schaltungsblock 46 angedeutet. In diesem optionalen Fall wird an dem Ausgang 47 die Bildinformation BI als aufbereitete Bildinformation BI* bereitgestellt.

Der Schaltungsblock 46 kann bei allen Ausführungsformen, falls vorhanden, auch zur software-gestützten Nachbearbeitung oder Aufbereitung der Bildinformation BI ausgelegt sein.

Die Nachbearbeitung oder Aufbereitung der Bildinformation BI kann bei allen Ausführungsformen aber auch teilweise durch die CCD-Vorrichtung 41 und teilweise durch einen nachgeschalteten Prozessor (z.B. als Teil eines Computers oder einer Steuerung 50) vorgenommen werden.

Die Nachbearbeitung oder Aufbereitung der Bildinformation BI kann bei allen Ausführungsformen aber auch nur durch einen nachgeschalteten Prozessor (z.B. als Teil eines Computers oder einer Steuerung 50) vorgenommen werden.

Die aufbereitete Bildinformation BI* kann sich z.B. dadurch von der Bildinformation BI unterscheiden, dass eine oder mehrere der folgenden Maßnahmen bei der Nachbearbeitung oder Aufbereitung der Bildinformation BI zur Anwendung gekommen sind:
- Entfernen von Bildstörungen und/oder Rauschen,
- Anpassung der Helligkeit,
- Anpassung des Kontrastes,
- Anpassung von Farbinformation, falls es sich bei dem CCD-Element 42 um ein farbverarbeitendes Element handelt,
- Datenkompression,
- Ausblenden von störenden Artefakten, usw.

FIG. 3C zeigt eine schematisierte Blockdarstellung beispielhafter Komponenten eines Moduls 51, das bei allen Ausführungsformen zum Durchführen des Ermittlungsverfahrens der Erfindung eingesetzt werden kann. Das Modul 51 kann z.B. in der CNC-Steuerung 50 implementiert sein, wie in Fig. 4 angedeutet.

Das Modul 51 kann bei allen Ausführungsformen aber auch an einem anderen Ort realisiert sein (z.B. in dem Rechner 10). Das Modul 51 kann bei allen Ausführungsformen aber auch als autarkes Modul ausgeführt sein, das mindestens einen Prozessor, einen Programmspeicher und einen Arbeitsspeicher umfasst.

Vorzugsweise ist das Modul 51 bei allen Ausführungsformen kommunikationstechnisch mit der CNC-Steuerung 50 und/oder dem Rechner 10 und/oder dem Detektor 40 der Bearbeitungsmaschine 20 verbunden.

Eine Bearbeitungsmaschine 20 der Erfindung umfasst, wie in Fig. 4 schematisch gezeigt, eine Werkstückspindel 22, die zur Aufnahme eines Zahnrad-Werkstücks 1 (hier in Form eines stilisiert dargestellten Hypoidzahnrads) ausgelegt ist. Ausserdem umfasst sie eine Werkzeugspindel 21 zur Aufnahme eines Schleifwerkzeugs 2 (hier in Form einer Topfschleifscheibe) sowie mehrere Antriebe (z.B. B1, B2 und weitere Antriebe, die nicht in dieser Figur gezeigt sind) zum Bearbeiten des Zahnrad-Werkstücks 1.

Das Werkzeug 2 führt beim Bearbeiten des Zahnrad-Werkstücks 1 eine Rotation um die Rotationsachse R1 der Werkzeugspindel 21 aus. Der entsprechende Achsantrieb ist mit A1 bezeichnet. Das Zahnrad-Werkstück 1 kann, je nachdem ob ein Einzelteilverfahren oder ein kontinuierlich teilendes Verfahren zum Einsatz kommt, um die Rotationsachse R2 drehangetrieben werden, wie in Fig. 4 durch den Antrieb B2 angedeutet.

Das Werkzeug 2 greift beim Bearbeiten in das vorverzahnte Zahnrad-Werkstück 1 ein, um Material abzutragen. Um das Einfahren des Werkzeugs 2 in Zahnlücken des Zahnrad-Werkstücks 1 zu beschleunigen (im Vergleich zu bisherigen Verfahren) und/oder um das Einfahren ohne Kollision ausführen zu können, kommt der optische Detektor 40 (z.B. in Form einer CCD Vorrichtung 41) zum Einsatz.

Weiterhin kann die Bearbeitungsmaschine 20 eine CNC-Steuerung 50 umfassen, die dazu ausgelegt ist die Bewegungsabläufe in der Maschine 20 zu steuern, wie durch die Steuersignale I1, I2 angedeutet. Diese Steuerung 50 kann z.B. die Linearachsen X, Y, Z (siehe Fig. 4) und die beiden Rotationsachsen R1, R2 kontrollieren und antreiben.

Weiterhin kann die Bearbeitungsmaschine 20 einen Prozessor umfassen oder mit einem Prozessor verbunden sein (z.B. über eine Kommunikationsverbindung). In Fig. 4 ist ein Rechner 10 gezeigt, der den Prozessor umfasst und der speziell dazu ausgelegt (programmiert) ist, das Verfahren der Erfindung auszuführen oder die Ausführung des Verfahren zu begleiten/unterstützen. Der Prozessor (hier beispielsweise als Teil eines Rechners 10) kann bei allen Ausführungsformen kommunikationstechnisch mit der Maschine 20 und/oder der Steuerung 50 verbunden sein, wie in Fig. 4 durch die kommunikationstechnische Verbindung 11 angedeutet.

Der Rechner 10 muss nicht zwingend bei den Ausführungsformen der Erfindung als vollständiger Rechner ausgeführt sein. Es kann bei allen Ausführungsformen auch ein Rechnermodul, ein Chipmodul oder eine Steckkarte mit Prozessor oder dergleichen eingesetzt werden. Der Rechner 10 kann bei allen Ausführungsformen auch Teil der Steuerung 50 sein, oder die Steuerung 50 kann Teil des Rechners 10 sein.

In Fig. 4 ist der Einfachheit halber eine Konstellation bezeigt, bei der ein optischer Detektor in Form einer CCD Vorrichtung 41 zum Einsatz kommt, der koaxial zur Rotationsachse R2 der Werkstückspindel 22 angeordnet ist. Die Apertur der CCD Vorrichtung 41 befindet sich hier links an der CCD Vorrichtung 41. Sie "blickt" genau entlang der Rotationsachse R2 quasi von vorne auf das Zahnrad-Werkstück 1. Wenn die CCD Vorrichtung 41, wie in Fig. 4 angedeutet, einen Abbildungsbereich a1 aufweist, der mit einer einzigen Bildaufnahme alle Zähne des Zahnrad-Werkstücks 1 erfasst, dann bedarf es keiner Relativbewegung des Zahnrad-Werkstücks 1 gegenüber dem optischen Detektor 40, um vollständige Bildinformation BI des Zahnrad-Werkstücks 1 zu erfassen.

Wie in Fig. 4 schematisch angedeutet, kann bei allen Ausführungsformen z.B. ein Ausgang 45 der CCD Vorrichtung 41 die Bildinformation BI an die Steuerung 50 liefern. Es kann bei allen Ausführungsformen alternativ oder zusätzlich eine direkte oder indirekte Kommunikationsverbindung zwischen der CCD Vorrichtung 41 und einem Prozessor (z.B. einem Rechner 10) vorhanden sein, um die Bildinformation BI an den Prozessor zu liefern.

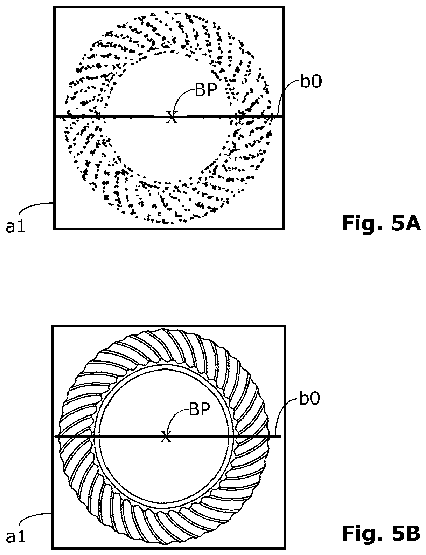

Ein optischer Detektor 40, wie hier zum Beispiel die CCD Vorrichtung 41, liefert Bildinformation BI. Diese Bildinformation BI umfasst vorzugsweise bei allen Ausführungsformen der Erfindung eine große Anzahl von Bildpunkten. In Fig. 5A sind innerhalb eines quadratischen Ausschnitts a1 beispielhaft und schematisch eine Anzahl von Bildpunkten gezeigt. Man kann in Fig. 5A andeutungsweise die Zähne des Hypoidzahnrads 1 erkennen, dessen Bild in einer Konstellation nach Fig. 4 erfasst wurde. Um diese Punktewolke aus einzelnen Bildpunkten technisch verwerten zu können, wird die Bildinformation BI gemäß Erfindung einem rechnerischen Ermittlungsverfahren unterzogen.

Fig. 5B zeigt denselben Ausschnitt a1 wie auch die Fig. 5A. Die Bildinformation BI der Fig. 5A wurde mit einem Algorithmus zur Kantendetektion aufbereitet und in einer digitalen Schaltung 46 nachbearbeitet. Dabei wurden Bildpunkte, die auf einem Linienzug oder Polygonzug liegen stärker betont, während andere Bildpunkte (wie z.B. einzelne Bildstörungen) unterdrückt wurden. In Fig. 5B kann auch das menschliche Auge nun deutlich den Kantenverlauf des Zahnrad-Werkstücks 1 erkennen.

Anhand der Figuren 5A und 5B wird ein weiterer beispielhafter Aspekt der Erfindung beschrieben. Auf optischem Wege oder mittels elektronischer Mittel kann hier bei allen Ausführungsformen eine Bildachse b0 überlagert oder eingeblendet werden. Da diese Bildachse b0, falls vorhanden, überlagert oder eingeblendet wird, ist diese sehr viel deutlicher zu erkennen als z.B. die Zahnkanten des Zahnrad-Werkstücks 1.

Falls der optische Detektor 40 (hier die CCD Vorrichtung 41) einen festen räumlichen Bezug zu einem Koordinatensystem der Bearbeitungsmaschine 20 hat, so ergibt sich daraus auch ein fester räumlicher Bezug für diese Bildachse b0. D.h. die Position der Bildachse b0 ist im 3-dimensionalen Raum der Bearbeitungsmaschine 20, respektive der Steuerung 50 oder dem Prozessor bekannt.

Im gezeigten Ausführungsbeispiel definiert diese Bildachse b0 somit die 9 Uhr und die 3 Uhr Stellung. Nach dem Durchführen des Ermittlungsverfahrens der Erfindung können nun beispielweise die charakteristischen Istgrössen cIG des Zahnrad-Werkstücks 1 zu der Position der Bildachse b0 in Bezug gesetzt werden.

Ausgehend von einem Bezugspunkt BP im 3-dimensionalen Raum (hier z.B. der Durchtrittspunkt der Rotationsachse R2 durch die Ebene des Ausschnitts a1), kann nun jeder Zahnflanke des Zahnrad-Werkstücks 1 eine exakte Ist-Position (z.B. als Angabe in Winkelgraden) zugeordnet werden.

Bei einem idealen Zahnrad-Werkstück 1, d.h. bei einem Werkstück, das 1:1 der Soll-Vorgabe entspricht, würde sich nun beim (rechnerischen) Überlagern oder (rechnerischen) Vergleichen des Ist-Positionen der Zahnflanken mit den Soll-Positionen der Zahnflanken (diese Soll-Positionen der Zahnflanken kann z.B. aus der rechnerischen Auslegung des Zahnrad-Werkstücks 1 vorliegen) keine Abweichungen ergeben. D.h. alle Zahnflanken würden exakt auf der vorherbestimmten Position liegen.

Da es beim Vorverzahnen und/oder anschliessenden Härten des Zahnrad-Werkstücks 1 aber zu Wärmeverzügen kommen kann, ergeben sich typischerweise Abweichungen zwischen den Ist-Positionen der Zahnflanken und den Soll-Positionen der Zahnflanken.

Die Erfindung ermöglicht nun verschiedene Ansätze für das Nachbearbeiten z.B. der Zahnflanken des Zahnrad-Werkstücks 1.

So kann z.B. durch die Anwendung eines rechnerischen Optimierungsverfahrens versucht werden die Ist-Position jeder Zahnflanke mit der Soll-Positionen einer entsprechenden Zahnflanke zur Deckung zu bringen, dass alle Ist-Zähne nur ein geringes Aufmass gegenüber den Soll-Zähnen haben. In diesem Fall muss im Rahmen der Nachbearbeitung des Zahnrad-Werkstücks 1 in der Bearbeitungsmaschine 20 nur relativ wenig Material an den Zahnflanken mit dem Werkzeug 2 abgenommen werden.

In der Praxis werden Toleranzen (z.B. ein Toleranzfenster) vorgegeben, da es nie exakt möglich sein wird alle Zahnflanken so nachzubearbeiten, dass sie nach der Nachbearbeitung exakt mit den Soll-Flanken zusammen fallen.

Unter Anwendung von Toleranzen ist es in den meisten Fällen möglich die Nachbearbeitung in der Bearbeitungsmaschine 20 so zu planen und auszuführen, dass alle Zahnflanken nach dem Bearbeiten im Toleranzfenster der Soll-Flanken liegen.

Wie anhand dieses Beispiels beschrieben, können die auf optischem Wege ermittelten charakteristischen Istgrössen cIG bei allen Ausführungsformen verwendet werden, um die Schritte der Nachbearbeitung zu optimieren.

Zusätzlich können bei allen Ausführungsformen die auf optischem Wege ermittelten charakteristischen Istgrössen cIG dazu verwendet werden, um beim Nachbearbeiten das Werkzeug 2 kollisionsfrei in Zahnlücken des Zahnrad-Werkstücks 1 hineinzufahren. Wenn z.B. die konkave Zahnflanke der 1. Zahnlücke durch Schleifen nachbearbeitet werden muss, so kann die Bearbeitungsmaschine 20 über die Steuerung 50 das Zahnrad-Werkstück 1 um die Rotationsachse R2 drehen, bis das Werkzeug 2 in die 1. Zahnlücke eindringen kann. Dabei ist zu beachten, dass die Bearbeitungsmaschine 20 im Bereich der Rotationsachse R2 vorzugsweise eine Winkeldekoder 23 umfasst, wie in Fig. 4 schematisch angedeutet. Durch das Zusammenwirken von Steuerung 50, Antrieb B2 und Winkeldekoder 23 kann das Zahnrad-Werkstück 1 in jede Winkelposition gedreht werden, bevor das Werkzeug 2 zum Einsatz kommt. Das Verfahren der Erfindung kann bei allen Ausführungsformen dazu eingesetzt werden die Winkelposition der Zahnflanken und/oder Zahnlücken und/oder Zahnköpfe zu ermitteln, die nachbearbeitet werden müssen, um nur einige beispielhafte Einsatzmöglichkeiten zu nennen.

Grundsätzlich kann die Erfindung dazu eingesetzt werden, um Korrekturberechnungen vorzunehmen und dann entsprechende Korrekturbearbeitungen (hier Nachbearbeitungen genannt) in der Maschine 20 durchzuführen.

Grundsätzlich kann die Erfindung dazu eingesetzt werden, um anhand von optisch ermittelten Informationen Maschinen- und/oder Werkzeugeinstellungen zu berechnen, die dann beim Nachbearbeiten zum Einsatz kommen.

**Bezugszeichen:**

| | |
|---|---|
| Zahnrad-Werkstück, Zahnrad (z.B. Tellerrad) | 1 |
| Werkzeug (z.B. Schleifwerkzeug) | 2 |
| | |
| Zahn | 5 |
| Konkave Zahnflanke | 5.1 |
| Konvexe Zahnflanke | 5.2 |
| Zahnlücke | 6 |
| Zahnfuß | 7 |
| Rechner oder Prozessor (intern oder extern) | 10 |
| Kommunikationstechnische Verbindung (z.B. über Netzwerk) | 11 |
| | |
| Bearbeitungsmaschine (z.B. Schleifmaschine) | 20 |
| Werkzeugspindel | 21 |
| Werkstückspindel | 22 |
| Winkeldekoder | 23 |
| | |
| optischer Detektor | 40 |
| | |
| CCD-Vorrichtung | 41 |
| CCD-Element (CCD Chip) | 42 |
| Ausgang | 43 |
| Analog-zu-Digital Wandler | 44 |
| Ausgang | 45 |
| digitale Schaltung | 46 |
| Ausgang | 47 |
| Linse | 48 |
| | |
| CNC-Steuerung | 50 |
| Modul | 51 |
| Modul zur Ermittlung von geometrischer Information | 52 |
| Ausgang | 53 |
| | |
| Abbildungsbereich | Ab |
| Abbildungsbereich/Ausschnitt | a1 |
| Analog-zu-Digital Wandler | A/D |
| Rotationsantrieb/-achse / Achsantrieb | A1 |
| Bezugspunkt | BP |
| Antrieb | B2 |
| charakteristische Istgrössen | cIG |
| Steuersignale | I1, I2 |
| Nachbearbeitung (Post-Processor) | PP |
| Rotationsachse | R1 |
| Rotationsachse | R2 |
| Bildachse | b0 |
| Bildinformation | BI |
| Bildinformation (nachbearbeitet) | BI* |
| Ausschnitt | A1 |
| (analoges) Signal | s(t) |
| Zeit | t |
| Linearachsen | X, Y, Z |

## Patentansprüche

1. Verfahren zum Bearbeiten von vorverzahnten Zahnrad-Werkstücken (1), wobei in einer Bearbeitungsmaschine (20) ein Sensor, der zum Bereitstellen von Geometrieinformation ausgelegt ist, ein Werkzeug (2) an einer Werkzeugspindel (21) und ein Zahnrad-Werkstück (1) an einer Werkstückspindel (22) zum Einsatz kommen, mit den folgenden Schritten:
a) Einsetzen eines optischen Detektors (40) als Sensor, um Bildinformation (BI) des Zahnrad-Werkstücks (1) berührungslos zu erfassen,
b) Durchführen eines Ermittlungsverfahrens, um anhand der Bildinformation (BI) charakteristische Istgrössen (cIG) des Zahnrad-Werkstücks (1) zu ermitteln,
c) Durchführen eines Bearbeitungsverfahrens mindestens einer Flanke des Zahnrad-Werkstücks (1) mit dem Werkzeug (2), wobei mindestens eine charakteristische Istgrösse (cIG) verwendet wird, um durch eine Relativbewegung das Werkzeug (2) kollisionsfrei in eine Zahnlücke des Zahnrad-Werkstücks (1) zu bewegen, deren Flanke dem Bearbeitungsverfahren unterzogen werden soll.

2. Verfahren nach Anspruch 1, **dadurch gekennzeichnet, dass** der Detektor (40) dazu ausgelegt ist Bildinformation (BI) mindestens eines Teils des Zahnrad-Werkstücks (1) bereit zu stellen.

3. Verfahren nach Anspruch 2, **dadurch gekennzeichnet, dass** während des Einsetzens des optischen Detektors (40) eine Relativbewegung zwischen dem Detektor (40) und dem Zahnrad-Werkstück (1) ausgeführt wird, um Bildinformation (BI) eines grösseren Bereichs des Zahnrad-Werkstücks (1) bereit zu stellen.

4. Verfahren nach Anspruch 2 oder 3, **dadurch gekennzeichnet, dass** beim Durchführen des Ermittlungsverfahrens die Bildinformation (BI) in Kanten- und/oder Flächenangaben umgewandelt wird, die zur Ermittlung der charakteristischen Istgrössen (cIG) dienen.

5. Verfahren nach Anspruch 4, **dadurch gekennzeichnet, dass** die Bildinformation (BI) in Kantenangaben unter Einsatz eines Algorithmus zur Kantendetektion umgewandelt wird.

6. Verfahren nach einem der Ansprüche 1 bis 5, **dadurch gekennzeichnet, dass** das Ermittlungsverfahren durchgeführt wird, um die Position mindestens eines Zahnkopfes oder mindestens einer Zahnflanke oder mindestens einer Zahnlücke als charakteristische Istgrösse (cIG) zu ermöglichen.

7. Verfahren nach einem der Ansprüche 1 bis 5, **dadurch gekennzeichnet, dass** es sich bei dem Detektor um einen CCD-Detektor handelt, der eine Gruppe von Detektorelementen umfasst, um eine Anzahl von Bildpunkten des Zahnrad-Werkstücks (1) als Bildinformation (BI) bereitstellen zu können.

8. Bearbeitungsmaschine (20) zum Bearbeiten eines Zahnrad-Werkstücks (1), umfassend:
- eine Werkzeugspindel (21) zum Befestigen eines Werkzeugs (2),
- eine Werkstückspindel (22) zum Befestigen des Zahnrad-Werkstücks (1),
- eine CNC-Steuerung (50) und mehrere Achsen (R1, R2, X, Y, Z) zum CNC-gesteuerten Bearbeiten des Zahnrad-Werkstücks (1) mit dem Werkzeug (2),
**dadurch gekennzeichnet, dass**
- die Bearbeitungsmaschine (20) einen optischen Detektor (40) umfasst, der dazu einsetzbar ist, um Bildinformation (BI) des Zahnrad-Werkstücks (1) zu erfassen, und
- die Bearbeitungsmaschine (20) ein Modul (51) umfasst, das dazu ausgelegt ist anhand der Bildinformation (BI) des Zahnrad-Werkstücks (1) charakteristische Istgrössen (cIG) des Zahnrad-Werkstücks (1) zu ermitteln.

9. Bearbeitungsmaschine (20) nach Anspruch 8, **dadurch gekennzeichnet, dass** die Bearbeitungsmaschine (20) dazu ausgelegt ist eine Relativbewegung zwischen dem Detektor (40) und dem Zahnrad-Werkstück (1) auszuführen, während der Detektor (40) Bildinformation (BI) des Zahnrad-Werkstücks (1) erfasst.

10. Bearbeitungsmaschine (20) nach Anspruch 8 oder 9, **dadurch gekennzeichnet, dass** das Modul (51) ausgelegt ist
- zum Durchführen eines Verfahrens, um die Bildinformation (BI) des Zahnrad-Werkstücks (1) zu erfassen, und
- zur Ermittlung der charakteristischen Istgrössen (cIG) aus Kanten- und/oder Flächenangaben, die aus der Bildinformation (BI) gewonnen werden.

11. Bearbeitungsmaschine (20) nach Anspruch 8 oder 9, **dadurch gekennzeichnet, dass** das Modul (51) ausgelegt ist unter Einsatz eines Algorithmus die Bildinformation (BI) zur Kantendetektion zu verarbeiten.

12. Bearbeitungsmaschine (20) nach einem der Ansprüche 8 bis 11, **dadurch gekennzeichnet, dass** es sich bei dem Detektor (40) um einen CCD-Detektor handelt, der eine Gruppe von Detektorelementen umfasst, um eine Anzahl von Bildpunkten des Zahnrad-Werkstücks (1) als Bildinformation (BI) bereitstellen zu können.
